# EUROPÄISCHE PATENTSCHRIFT

(11) **EP 2 309 604 B1**
(45) Veröffentlichungstag und Bekanntmachung des Hinweises auf die Patenterteilung: **07.06.2017**
(21) Anmeldenummer: 10013258.8
(22) Anmeldetag: 04.10.2010
(51) Int. Cl.: H01R 13/627, H01R 13/11, H05B 3/84, H01Q 1/12

(54) **Elektrisch leitende Verbindung und Verbundglasscheibe damit**
Electrically conductive connection and compound glass pane with same
Liaison à conduction électrique et vitre composite en étant équipée

(30) Priorität: 12.10.2009 DE 102009049144; 27.08.2010 DE 102010035696
(43) Veröffentlichungstag der Anmeldung: 13.04.2011
(73) Patentinhaber: Mektec Europe GmbH, 41812 Erkelenz (DE)
(72) Erfinder: Leben, Thomas, 14532 Stahnsdorf (DE); Weigele, Dieter, 74613 Öhringen (DE)
(74) Vertreter: Wesch, Arno

(56) Entgegenhaltungen:
- EP-A1- 0 593 940
- EP-A1- 1 095 670
- EP-A2- 1 139 697
- WO-A1-03/001631
- DE-A1-102006 061 599
- US-A- 2 314 751
- US-A- 4 831 278
- US-A1- 2007 224 842
- US-A1- 2008 053 701
- US-B1- 6 376 773

## Beschreibung

### Technisches Gebiet

Die Erfindung betrifft eine Verbundglasscheibe gemäß dem Oberbegriff des Patentanspruchs 1 und eine Verwendung gemäß dem Oberbegriff des Patentanspruchs 13.

### Stand der Technik

Aus der US 2007/224842 A1 ist eine elektrisch leitende Verbindung bekannt, die einen Flachleiter und ein Kabel umfasst, wobei der Flachleiter und das Kabel durch eine Steckverbindung zerstörungsfrei lösbar miteinander verbunden sind. In der EP 0 593 940 A1 ist eine Verbundglasscheibe mit eingebetteten Metalldrähten mit einem Steckkontaktelement und einem das Steckkontaktelement mit den Metalldrähten verbindenden Anschlusskabel versehen.

Derartige elektrisch leitende Verbindungen sind allgemein bekannt und gelangen beispielsweise zur Anwendung, um beheizbare Verbundglasscheiben mit dem Kabelbaum eines Kraftfahrzeugs zu verbinden. Der Flachleiter ist dabei mit der Scheibenheizung innerhalb der Verbundglasscheibe elektrisch leitend verbunden und das Kabel, das als Rundkabel ausgebildet ist, ist durch eine Steck- oder Crimpverbindung mit dem Kabelbaum des Kraftfahrzeugs elektrisch leitend verbunden. Die elektrisch leitende Verbindung zwischen dem Flachleiter und dem Kabel erfolgt durch eine Lötverbindung oder Crimpverbindung. Dadurch sind der Flachleiter und das Kabel praktisch unlösbar miteinander verbunden. Die Lötverbindung zwischen dem Flachleiter und dem Kabel hat jedoch den Nachteil, dass bei einer herstellungs- oder montagebedingten Beschädigung der Verbundglasscheibe oder des Flachleiters auch das Kabel Ausschuss ist oder dass bei einer montagebedingten Beschädigung des Kabels, zum Beispiel bei seiner Verbindung mit dem Kabelbaum, die mittels des Flachleiters daran angeschlossene Verbundglasscheibe ebenso Ausschuss ist. Das ist in fertigungstechnischer und wirtschaftlicher Hinsicht nachteilig. Es ist bekannt, dass sowohl die Herstellung von Verbundglasscheiben, in denen elektrische Verbraucher angeordnet sind, als auch die Montage des Kabels am Kabelbaum problematisch ist. Bei der Herstellung von Verbundglasscheiben kann es immer wieder vorkommen, dass die Verbundglasscheiben während ihrer Herstellung im Autoklaven beschädigt/zerstört werden. Bei der Montage von Kraftfahrzeugen, insbesondere bei der Verbindung der Kabel von elektrischen Verbrauchern mit dem Kabelbaum, geht es häufig ruppig zu, so dass während dieser Montage die Kabel beschädigt werden können.

### Darstellung der Erfindung

Der Erfindung liegt die Aufgabe zugrunde, eine elektrisch leitende Verbindung der eingangs genannten Art derart weiter zu entwickeln, dass der herstellungs- oder montagebedingte Ausschuss von Flachleitern und Kabeln reduziert wird. Diese Aufgabe wird erfindungsgemäß durch die Ansprüche 1 und 13 gelöst. Auf vorteilhafte Ausgestaltungen nehmen die rückbezogenen Ansprüche Bezug.

Zur Lösung der Aufgabe ist eine elektrisch leitende Verbindung vorgesehen, umfassend einen Flachleiter und ein Kabel, wobei der Flachleiter und das Kabel durch eine Steckverbindung zerstörungsfrei lösbar miteinander verbunden sind. Im Hinblick auf die Minimierung von herstellungsbedingtem und / oder montagebedingtern Ausschuss ist eine solche Ausgestaltung von hervorzuhebendem Vorteil. Der Flachleiter und das Kabel können durch die Steckverbindung bedarfsweise zerstörungsfrei voneinander gelöst werden. Das noch intakte Bauteil kann wieder verwendet werden. Der Flachleiter kann mit einem elektrischen Verbraucher in einer Verbundglasscheibe elektrisch leitend verbunden sein; das Kabel kann auf der dem Flachleiter abgewandten Seite mit dem Kabelbaum eines Kraftfahrzeugs verbunden werden. Die Verbundglasscheibe und der Flachleiter sind unlösbar miteinander verbunden. Kommt es beispielsweise bei der Herstellung der Verbundglasscheibe zu einer Beschädigung / Zerstörung der Verbundglasscheibe, wird dadurch auch der Flachleiter, der teilweise in der Verbundscheibe angeordnet und unlösbar mit dem elektrischen Verbraucher in der Verbundglasscheibe verbunden ist, unbrauchbar. Das Kabel ist davon nicht betroffen und kann dadurch, dass es durch die Steckverbindung vom Flachleiter gelöst werden kann, problemlos weiter verwendet werden. Wird umgekehrt bei der Verbindung des Kabels mit dem Kabelbaum das Kabel montagebedingt beschädigt / zerstört, ist davon der Flachleiter und der mit dem Flachleiter verbundene elektrische Verbraucher in der Verbundglasscheibe sowie die Verbundglasscheibe selbst nicht betroffen.

Bei Beschädigung des Flachleiters oder des Kabels kann die Steckverbindung zerstörungsfrei gelöst werden und das Kabel oder der Flachleiter, die unbeschädigt sind, können wieder verwendet werden.

Die Steckverbindung ist als Druckknopfverbindung ausgebildet. Die Trennung oder Verbindung von Flachleiter und Kabel kann dadurch besonders einfach erfolgen.

Nach einer vorteilhaften Ausgestaltung kann es vorgesehen sein, dass die Druckknopfverbindung durch ein Kontakt-Unterteil und ein Kontakt-Oberteil gebildet ist und dass das Kontakt-Unterteil und das Kontakt-Oberteil kraft-und / oder formschlüssig elektrisch leitend verbunden sind. Eine solche klassische Druckknopfverbindung ist einfach und kostengünstig herstellbar. Außerdem sind der Flachleiter und das Kabel dadurch während einer langen Gebrauchsdauer zuverlässig elektrisch leitend miteinander verbunden.

Der Flachleiter kann auf der dem Kabel zugewandten Seite mit dem Kontakt-Unterteil und das Kabel auf der dem Flachleiter zugewandten Seite mit dem Kontakt-Oberteil verbunden sein. Hierbei ist von Vorteil, dass die Handhabung der Druckknopfverbindung bei einer derartigen Ausgestaltung besonders einfach ist. Das Kabel kann von oben mit seinem Kontakt-Oberteil auf das Kontakt-Unterteil des Flachleiters aufgeknöpft werden. Das Kontakt-Unterteil ist für eine einfache Montage gut zugänglich.

Das Kabel kann als Rundkabel ausgebildet sein. Die erfindungsgemäße Verbindung ist zur Verbindung von einem Flachleiter und einem als Rundkabel ausgebildeten Kabel besonders gut geeignet, weil sich in ihrer Gestalt unterschiedliche Bauteile wie Flachleiter und Rundkabel ansonsten nicht besonders einfach und/oder haltbar verbinden lassen.

Der Flachleiter kann auf der der Druckknopfverbindung abgewandten Seite einen ersten elektrischen Anschluss aufweisen, wobei der Flachleiter zwischen dem ersten Anschluss und der Druckknopfverbindung eine erste Isolierung aufweist. Der Flachleiter ist mittels seines ersten elektrischen Anschlusses, zum Beispiel mit einem elektrischen Verbraucher verbunden, der innerhalb einer Verbundglasscheibe angeordnet ist. Um die Umgebung des Flachleiters zu schützen und den Flachleiter von äußeren Einflüssen, ist die erste Isolierung vorgesehen.

Das Kabel kann auf der der Druckknopfverbindung abgewandten Seite einen zweiten elektrischen Anschluss aufweisen, der mit dem Kabelbaum eines Kraftfahrzeugs verbindbar ist. Die beanspruchte elektrisch leitende Verbindung verbindet in einem solchen Fall den Kabelbaum eines Kraftfahrzeugs mit dem elektrischen Verbraucher, der in der Verbundglasscheibe angeordnet ist.

Ebenso wie der Flachleiter von der ersten Isolierung umschlossen ist, kann das Kabel zwischen Druckknopfverbindung und zweitem Anschluss von einer zweiten Isolierung umschlossen sein.
Im Stand der Technik, wenn der Flachleiter und das Kabel durch eine Lötverbindung praktisch unlösbar miteinander verbunden sind, musste das Kabel einschließlich seiner zweiten Isolierung wärmedruckbeständig sein, um bei der Herstellung von Verbundglasscheiben mit elektrischen Verbrauchern verwendet werden zu können. Eine solche Anforderung "Wärmedruckbeständigkeit" muss nun nicht mehr erfüllt werden, weil das Kabel mit Kontakt-Oberteil durch die Druckknopfverbindung getrennt vom Flachleiter ist und deshalb an der Herstellung einer Verbundglasscheibe mit elektrischem Verbraucher und Flachleiter nicht beteiligt ist.

Die Druckknopfverbindung und die daran jeweils anschließenden Anschlussbereiche von Flachleiter und Kabel sind von einem Gehäuse umschlossen, wobei das Gehäuse eine im Inneren des Gehäuses angeordnete Abdichtung aufweist. Ein solches Gehäuse bildet einen Schutz für die Druckknopfverbindung. Das Gehäuse schützt die Druckknopfverbindung sowohl vor unerwünschten äußeren mechanischen Belastungen als auch vor unerwünschten Umgebungseinflüssen, wie beispielsweise Feuchtigkeit. Durch das Gehäuse, das die Druckknopfverbindung schützt, wird eine einwandfreie elektrisch leitende Verbindung zwischen dem Flachleiter und dem Kabel während einer langen Gebrauchsdauer sicher gestellt.

Das Gehäuse und die Abdichtung sind als vormontierbare Einheit ausgebildet. Dadurch ist die Montage des Gehäuses um die Druckknopfverbindung wesentlich vereinfacht. Die vormontierbare Einheit wird
nur um die Druckknopfverbindung herum gelegt und anschließend verschlossen.

Die Abdichtung kann durch einen Silikonkautschuk gebildet sein, der das Gehäuse im Wesentlichen vollständig ausfüllt und die Druckknopfverbindung unmittelbar anliegend und im Wesentlichen vollständig umschließt. Die Druckknopfverbindung ist dadurch hermetisch abgeschlossen. Der Silikonschaum schützt einerseits die Druckknopfverbindung vor Feuchtigkeit, die in das Gehäuse eindringen könnte, und andererseits bildet der Silikonschaum einen Puffer, der die Druckknopfverbindung vor mechanischen äußeren Belastungen schützt. Durch seine Nachgiebigkeit schmiegt sich der Silikonschaum an die Druckknopfverbindung besonders gut an. Luft um die Druckknopfverbindung bleibt praktisch nicht.

Das Gehäuse kann zwei Gehäuseschalen umfassen, wobei die erste Gehäuseschale Rastnasen aufweisen kann, die in Hinterschneidungen der zweiten Gehäuseschale einrastbar sind. Eine solche Ausgestaltung ist einfach und kostengünstig herstellbar und ausreichend haltbar, zumal die Gehäuseschalen im Normalfall nur sehr selten voneinander getrennt werden, um das Gehäuse zu öffnen.

Die Gehäuseschalen können durch ein Scharnier zerstörungsfrei auf- und zuklappbar miteinander verbunden sind. Durch das Scharnier bilden die beiden Gehäuseschalen eine Einheit und die Handhabung des Gehäuses ist vereinfacht. Das aufklappbare Gehäuse wird zur Montage um die Druckknopfverbindung gelegt, die Gehäuseschalen werden um das Scharnier zugeklappt und zum Beispiel durch die Rastnasen und die Hinterschneidungen ineinander eingerastet. Der Silikonschaum legt sich während des Montagevorgangs selbsttätig um die Druckknopfverbindung und außerdem um die Bereiche von Flachleiter und Kabel, die sich jeweils an die Druckknopfverbindung anschließen.

Außerdem betrifft die Erfindung eine Verbundglasscheibe, in der ein elektrischer Verbraucher angeordnet ist, umfassend eine elektrisch leitende Verbindung, wie zuvor beschrieben. Durch die Gefahr einer Beschädigung / Zerstörung der Verbundglasscheibe während ihrer Herstellung ist es generell sinnvoll, dass in einem solchen Fall nur möglichst wenige andere Teile ebenfalls Ausschuss sind. Das ist bei der erfindungsgemäßen Verbundglasscheibe der Fall. Wird die Verbundglasscheibe bei ihrer Herstellung beschädigt / zerstört, bleibt das Kabel mit Kontakt-Oberteil davon unbeeinflusst. Lediglich der in der Verbundglasscheibe teilweise angeordnete Flachleiter mit Kontakt-Unterteil ist dann ebenso, wie die beschädigte / zerstörte Verbundglasscheibe, unbrauchbar.

Der erste elektrische Anschluss des Flachleiters ist mit dem elektrischen Verbraucher elektrisch leitend verbunden, wobei der Flachleiter teilweise in der Verbundglasscheibe angeordnet ist. Der erste elektrische Anschluss des Flachleiters und der elektrische Verbraucher sind beispielsweise durch eine Lötverbindung elektrisch leitend miteinander verbunden.

Der elektrische Verbraucher kann eine Scheibenheizung oder eine Antenne sein. Scheibenheizungen oder Antennen gelangen häufig in Verbundglasscheiben von Kraftfahrzeugen zur Anwendung. Solche Verbundglasscheiben sind allgemein bekannt, wobei zwischen den zur Anwendung gelangenden Glasschichten die elektrischen Verbraucher angeordnet sind.

Die erste Isolierung des Flachleiters kann teilweise in der Verbundglasscheibe angeordnet sein. Dadurch weist der Flachleiter mit Kontakt-Unterteil eine gute Formstabilität auf und kann deshalb problemlos mit dem Kabel mit Kontakt-Oberteil mittels der Druckknopfverbindung verbunden werden.

### Kurzbeschreibung der Zeichnung

Ein Ausführungsbeispiel der erfindungsgemäßen elektrisch leitenden Verbindung und der Verbundglasscheibe wird im Folgenden anhand der Fig. 1 bis 3 näher erläutert.

Es zeigen jeweils In schematischer Darstellung:
Fig. 1 die elektrisch leitende Verbindung, bei der der Flachleiter und das Kabel durch die Druckknopfverbindung noch nicht miteinander verbunden sind,
Fig. 2 ein Gehäuse, das im Inneren eine Abdichtung aufweist, als vormontierte Einheit,
Fig. 3 die elektrisch leitende Verbindung während ihrer bestimmungsgemäßen Verwendung.

### Ausführung der Erfindung

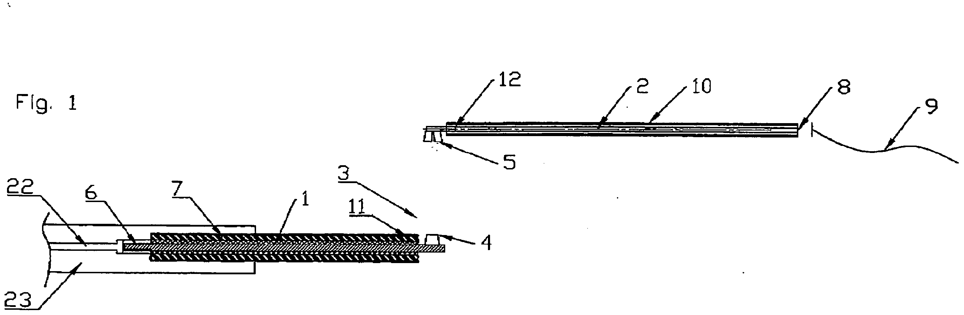

In Fig. 1 ist ein Ausführungsbeispiel einer elektrisch leitenden Verbindung gezeigt, die einen Flachleiter 1 und ein Kabel 2, das als Rundkabel ausgebildet ist, umfasst. Der Flachleiter 1 und das Kabel 2 sind durch die als Druckknopfverbindung 3 ausgebildete Steckverbindung noch nicht miteinander verbunden.
Die Druckknopfverbindung 3 ist durch ein Kontakt-Unterteil 4 gebildet, das auf der dem Kabel 2 zugewandten Seite des Flachleiters 1 angeordnet ist; das kongruent gestaltete Kontakt-Oberteil 5 ist auf der dem Flachleiter 1 zugewandten Seite des Kabels 2 angeordnet.

Der Flachleiter 1 weist auf seiner der Druckknopfverbindung 3 abgewandten Seite einen ersten elektrischen Anschluss 6 auf, der mit dem elektrischen Verbraucher 22 innerhalb der Verbundglasscheibe 23 elektrisch leitend verbunden ist. Der elektrische Verbraucher 22 ist in diesem Ausführungsbeispiel durch eine Scheibenheizung gebildet.
Auf der dem Kabel 2 abgewandten Seite des Flachleiters 1 ist dieser mit seinem ersten Anschluss 6 und einem Teil der ersten Isolierung 7 ebenfalls in der Verbundglasscheibe 23 angeordnet, wobei ein Teil des Flachleiters 1 und das Kontakt-Unterteil 4 aus der Verbundglasscheibe 23 hervorstehen, um mit dem Kabel 2 verbunden werden zu können.

Das Kabel 2 ist in Fig. 1 noch nicht mit dem Kabelbaum 9, der zum Beispiel in einem Kraftfahrzeug angeordnet ist, durch den zweiten elektrischen Anschluss 8 elektrisch leitend verbunden. Das Kabel 2 ist zwischen dem Kontakt-Oberteil 5 und dem zweiten Anschluss von der zweiten Isolierung 10 umschlossen.

Die Erfindung ist nicht auf das hier beschriebene Beispiel beschränkt. Generell können auch andere elektrisch leitende Verbindungen hergestellt werden, bei denen ein Flachleiter 1 mit einem Rundkabel 2 durch eine Druckknopfverbindung 3 zerstörungsfrei lösbar miteinander verbunden sind. Durch die Trennbarkeit des Flachleiters 1 und des Rundkabels 2 mittels der Druckknopfverbindung 3 können Flachleiter 1 oder Kabel 2 bedarfsweise getrennt voneinander ausgetauscht werden. Auch besteht die Möglichkeit, wie bei einem Baukasten, unterschiedliche Flachleiter 1 mit unterschiedlichen Kabeln 2 zu kombinieren und durch die Druckknopfverbindung 3 elektrisch leitend miteinander zu verbinden.

Im hier dargestellten Beispiel kann, falls die Verbundglasscheibe während ihrer Herstellung oder während des Gebrauchs beschädigt / zerstört wird, die elektrisch leitende Verbindung Im Bereich der Druckknopfverbindung 3 voreinander getrennt werden, so dass das Kabel 2, das während der bestimmungsgemäßen Verwendung zum Beispiel mit dem Kabelbaum 9 eines Kraftfahrzeugs verbunden ist, weiter verwendet werden kann.
Umgekehrt hat ein beschädigtes Kabel 2 nicht zur Folge, dass auch die Verbundglasscheibe 23 mit dem elektrischen Verbraucher 22 ausgetauscht werden muss; ist das Kabel 2 zum Beispiel beschädigt, wird die Druckknopfverbindung 3 gelöst, das alte Kabel 2 ausgetauscht und das neue Kabel 2 durch die Druckknopfverbindung 3 mit dem Flachleiter 1 wieder elektrisch leitend verbunden. Durch diese einfache Montage beziehungsweise Demontage mittels der Druckknopfverbindung 3 ergeben sich wesentliche Kostenvorteile.

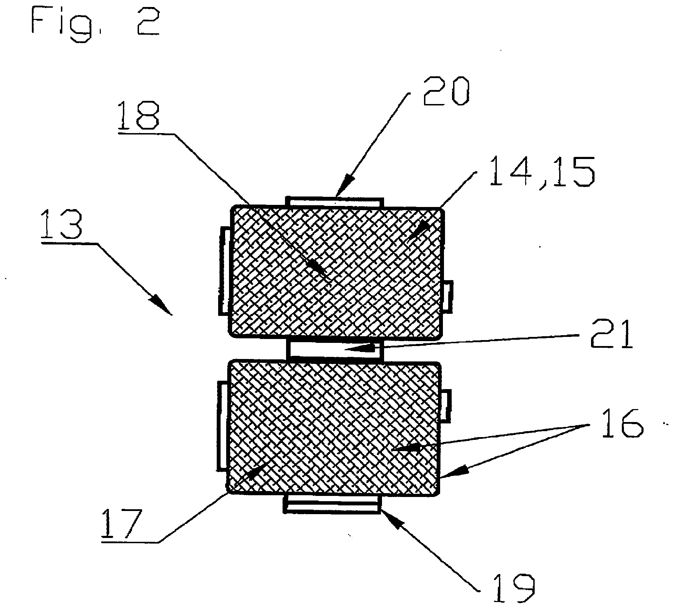

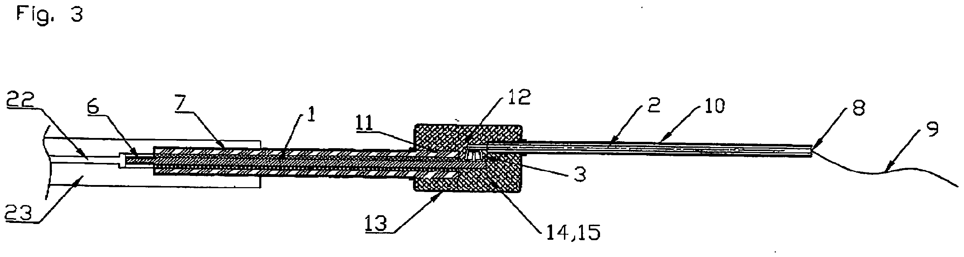

In Fig. 2 ist ein Ausführungsbeispiel einer vormontierbaren Einheit 16 gezeigt, die das Gehäuse 13 und die Abdichtung 15 umfasst. Die Abdichtung 15 ist in diesem Ausführungsbeispiel durch einen Silikonschaum gebildet, der das Gehäuse 13 im Wesentlichen vollständig ausfüllt und die Druckknopfverbindung 3, wie in Flg. 3 gezeigt, unmittelbar anliegend und im Wesentlichen vollständig umschließt.

Das Gehäuse 13 besteht in diesem Ausführungsbeispiel aus einem polymeren Werkstoff und ist vorgesehen, um die elektrisch leitende Verbindung im Bereich der Druckknopfverbindung 3 vor mechanischen Einflüssen und / oder Umwelteinflüssen zu schützen.

Das Gehäuse 13 umfasst zwei Gehäuseschalen 17, 18, die durch Rastnasen 19 der ersten Gehäuseschale 17 und Hinterschneidungen 20 der zweiten Gehäuseschale 18 ineinander einrastbar sind. Eine vereinfachte und prozesssichere Montage des Gehäuses 13 Im Bereich der Druckknopfverbindung 3 wird durch das Scharnier 21 erreicht. Dadurch sind die beiden Gehäuseschalen 17, 18 verliersicher miteinander verbunden. Durch die Rastnasen 19, die Hinterschneidungen 20 und das Scharnier 21 können die Gehäuseschalen 17, 18 zerstörungsfrei auf- und zugeklappt werden. Dadurch wird sichergestellt, dass einerseits die Druckknopfverbindung 3 bedarfsweise gelöst und anschließend verbunden werden kann und andererseits das Gehäuse 13 wieder verwendbar ist.

In Fig. 3 ist die elektrisch leitende Verbindung während ihrer bestimmungsgemäßen Verwendung gezeigt.
Durch den Flachleiter 1 ist die Scheibenheizung, die den elektrischen Verbraucher 22 bildet und in der Verbundglasscheibe 23 angeordnet ist, durch die Druckknopfverbindung 3 elektrisch leitend mit dem Kabel 2 verbunden, wobei das Kabel 2, auf der dem Flachleiter 1 abgewandten Seite mit dem Kabelbaum 9 eines hier nicht dargestellten Kraftfahrzeugs verbunden ist. Die Druckknopfverbindung ist zerstörungsfrei lösbar und wird durch das Kontakt-Unterteil 4 des Flachleiters 1 und das Kontakt-Oberteil 5 des Kabels 2 gebildet. Zum Schutz vor Feuchtigkeit und / oder unerwünscht hohen mechanischen Belastungen sind die an die Druckknopfverbindung 3 anschließenden Anschlussbereiche 11, 12 vom Flachleiter 1 und Kabel 2 von dem Gehäuse 13, in dem die Abdichtung 15 angeordnet ist, ebenfalls hermetisch umschlossen. Der Silikonschaum der Abdichtung 15 füllt das Gehäuse 13 im Wesentlichen vollständig aus und die Druckknopfverbindung 3 ist von der Abdichtung 15 unmittelbar anliegend und im Wesentlichen vollständig umschlossen.

## Patentansprüche

1. Verbundglasscheibe, in der ein elektrisch leitender Verbraucher (22) angeordnet ist, wobei ein erster elektrischer Anschluss (6) des Flachleiters (1) mit dem elektrischen Verbraucher (22) elektrisch leitend verbunden ist, wobei der Flachleiter (1) teilweise in der Verbundglasscheibe angeordnet ist und wobei die Verbundglasscheibe eine elektrisch leitende Verbindung umfasst, die einen Flachleiter (1) und ein Kabel (2) umfasst, wobei der Flachleiter (1) und das Kabel (2) durch eine Steckverbindung zerstörungsfrei lösbar miteinander verbunden sind und wobei die Steckverbindung durch eine Druckknopfverbindung (3) gebildet ist,
**dadurch gekennzeichnet, dass** die Druckknopfverbindung (3) und die daran jeweils anschließenden Anschlussbereiche (11, 12) von Flachleiter (1) und Kabel (2) von einem Gehäuse (13) umschlossen sind, wobei das Gehäuse (13) eine im Inneren (14) des Gehäuses (13) angeordnete Abdichtung (15) aufweist und wobei das Gehäuse (13) und die Abdichtung (15) als vormontierbare Einheit ausgebildet sind.

2. Verbundglasscheibe nach Anspruch 1, **dadurch gekennzeichnet, dass** die Druckknopfverbindung (3) durch ein Kontakt-Unterteil (4) und ein Kontakt-Oberteil (5) gebildet ist und dass das Kontakt-Unterteil (4) und das Kontakt-Oberteil (5) kraft-und/oder formschlüssig elektrisch leitend verbunden sind.

3. Verbundglasscheibe nach Anspruch 2, **dadurch gekennzeichnet, dass** der Flachleiter (1) auf der dem Kabel (2) zugewandten Seite mit dem Kontakt-Unterteil (4) und das Kabel (2) auf der dem Flachleiter (1) zugewandten Seite mit dem Kontakt-Oberteil (5) verbunden ist.

4. Verbundglasscheibe nach einem der Ansprüche 1 bis 3, **dadurch gekennzeichnet, dass** das Kabel (2) als Rundkabel ausgebildet ist.

5. Verbundglasscheibe nach einem der Ansprüche 1 bis 4, **dadurch gekennzeichnet, dass** der Flachleiter (1) auf der der Druckknopfverbindung (3) abgewandten Seite einen ersten elektrischen Anschluss (6) aufweist und dass der Flachleiter (1) zwischen dem ersten Anschluss (6) und der Druckknopfverbindung (3) eine erste Isolierung (7) aufweist.

6. Verbundglasscheibe nach einem der Ansprüche 1 bis 5, **dadurch gekennzeichnet, dass** das Kabel (2) auf der der Druckknopfverbindung (3) abgewandten Seite einen zweiten elektrischen Anschluss (8) aufweist, der mit dem Kabelbaum (9) eines Kraftfahrzeugs verbindbar ist.

7. Verbundglasscheibe nach Anspruch 6, **dadurch gekennzeichnet, dass** das Kabel (2) zwischen Druckknopfverbindung (3) und zweitem Anschluss (8) von einer zweiten Isolierung (10) umschlossen ist.

8. Verbundglasscheibe nach einem der Ansprüche 1 bis 7, **dadurch gekennzeichnet, dass** die Abdichtung (15) durch einen Silikonschaum gebildet ist, der das Gehäuse (13) im Wesentlichen vollständig ausfüllt und die Druckknopfverbindung (3) unmittelbar anliegend und im Wesentlichen vollständig umschließt.

9. Verbundglasscheibe nach einem der Ansprüche 1 bis 8, **dadurch gekennzeichnet, dass** das Gehäuse (13) zwei Gehäuseschalen (17, 18) umfasst, dass die erste Gehäuseschale (17) Rastnasen (19) aufweist, die in Hinterschneidungen (20) der zweiten Gehäuseschale (18) einrastbar sind.

10. Verbundglasscheibe nach Anspruch 9, **dadurch gekennzeichnet, dass** die Gehäuseschalen (17, 18) durch ein Scharnier (21) zerstörungsfrei auf- und zuklappbar miteinander verbunden sind.

11. Verbundglasscheibe nach einem der Ansprüche 1 bis 10, **dadurch gekennzeichnet, dass** der elektrische Verbraucher (22) eine Scheibenheizung oder eine Antenne ist.

12. Verbundglasscheibe nach einem der Ansprüche 1 bis 11, **dadurch gekennzeichnet, dass** die erste Isolierung (7) des Flachleiters (1) teilweise in der Verbundglasscheibe (23) angeordnet ist.

13. Verwendung einer elektrisch leitenden Verbindung, umfassend einen Flachleiter (1) und ein Kabel (2), die durch eine Druckknopfverbindung (3) zerstörungsfrei lösbar miteinander verbunden sind, um einen elektrischen Verbraucher (22) in einer Verbundglasscheibe (23) elektrisch leitend zu verbinden, wobei dafür gesorgt wird, dass ein elektrischer Anschluss (6) des Flachleiters (1) mit dem elektrischen Verbraucher (22) elektrisch leitend verbunden ist und dass der Flachleiter (1) teilweise in der Verbundglasscheibe angeordnet ist,
**gekennzeichnet durch**
Montage eines Gehäuses (13) um die Druckknopfverbindung (3) und die daran jeweils anschließenden Anschlussbereiche (11, 12) von Flachleiter (1) und Kabel (2) herum, wobei das Innere (14) des Gehäuses (13) eine Abdichtung (15) aufweist und das Gehäuse (13) und die Abdichtung (15) als eine vormontierbare Einheit (16) ausgebildet sind.

14. Verwendung einer elektrisch leitenden Verbindung nach Anspruch 13, um einen elektrischen Verbraucher (22) in einer Verbundglasscheibe (23) nach einem der Ansprüche 1 bis 12 elektrisch leitend zu verbinden.

## Claims

1. A compound glass pane, in which an electrically conductive consumer (22) is disposed, wherein a first electrical connector (6) of the flat conductor (1) is electrically conductively connected with the electrical consumer (22), wherein the flat conductor (1) is partially disposed in the compound glass pane and wherein the compound glass pane comprises an electrically conductive connection comprising a flat conductor (1) and a cable (2), wherein the flat conductor (1) and the cable (2) are detachably connected with each other in a non-destructive manner by a plug-in connection, and wherein the plug-in connection is realised as a press-button connection (3),
**characterised in that** the press-button connection (3) and the respectively adjoining connecting areas (11, 12) of flat conductor (1) and cable (2) are enclosed in a housing (13), wherein the housing (13) comprises a seal (15) in the interior (14) of the housing (13) and wherein the housing (13) and the seal (15) are configured as a unit which can be pre-assembled.

2. The compound glass pane according to claim 1, **characterised in that** the press-button connection (3) is formed by a contact lower part (4) and a contact upper part (5) and **in that** the contact lower part (4) and the contact upper part (5) are electrically conductively connected in a force-locked and/or form-locked manner.

3. The compound glass pane according to claim 2, **characterised in that** the flat conductor (1) is connected with the contact lower part (4) on the side facing the cable (2) and the cable (2) is connected with the contact upper part (5) on the side facing the flat conductor (1).

4. The compound glass pane according to one of claims 1 to 3, **characterised in that** the cable (2) is configured as a round cable.

5. The compound glass pane according to one of claims 1 to 4, **characterised in that** the flat conductor (1), on the side facing away from the press-button connection (3), comprises a first electrical connector (6) and **in that** the flat conductor (1), between the first connector (6) and the press-button connection (3), comprises a first insulation (7).

6. The compound glass pane according to one of claims 1 to 5, **characterised in that** the cable (2), on the side facing away from the press-button connection (3), comprises a second electrical connector (8), which can be connected to the cable harness (9) of a motor vehicle.

7. The compound glass pane according to claim 6, **characterised in that** the cable (2) between press-button connection (3) and second connector (8) is enclosed by a second insulation (10).

8. The compound glass pane according to one of claims 1 to 7, **characterised in that** the seal (15) is formed by silicon foam, which essentially completely fills the housing (13) and essentially completely encloses the press-button connection (3) and is in direct contact therewith.

9. The compound glass pane according to one of claims 1 to 8, **characterised in that** the housing (13) includes two housing shells (17, 18), **in that** the first housing shell (17) has locking tabs (19), which are lockable in undercuts (20) of the second housing shell (18).

10. The compound glass pane according to claim 9, **characterised in that** the housing shells (17, 18) are non-destructively connected with each other by a hinge (21) so that they can be opened and closed.

11. The compound glass pane according to one of claims 1 to 10, **characterised in that** the electrical consumer (22) is a window heater or an aerial.

12. The compound glass pane according to one of claims 1 to 11, **characterised in that** the first insulation (7) of the flat conductor (1) is partially disposed in the compound glass pane (23).

13. A use of an electrically conductive connection comprising a flat conductor (1) and a cable (2), which are detachably connected which each other in a non-destructive manner by a press-button connection (3) in order to electrically conductively connect an electrical consumer (22) in a compound glass pane (23), wherein care has been taken to ensure that an electrical connector (6) of the flat conductor (1) is electrically conductively connected to the electrical consumer (22), and in that the flat conductor (1) is partially disposed in the compound glass pane,
**characterised by** assembling a housing (13) around the press-button connection (3) and the respectively adjoining connecting areas (11, 12) of flat conductor (1) and cable (2), wherein the interior (14) of the housing (13) has a seal (15) and the housing (13) and the seal (15) are configured as a unit (16), which can be pre-assembled.

14. The use of an electrically conductive connection according to claim 13, in order to electrically conductively connect an electrical consumer (22) in a compound glass pane (23) according to one of claims 1 to 12.

## Revendications

1. Vitre composite dans laquelle est placé un consommateur (22) conducteur électrique, un premier raccord (6) du conducteur plat (1) étant connecté de manière conductrice d'électricité avec le consommateur électrique (22), le conducteur plat (1) étant partiellement placé dans la vitre composite et la vitre composite comprenant une liaison conductrice d'électricité qui comprend un conducteur plat (1) et un câble (2), le conducteur plat (1) et le câble (2) étant reliés l'un à l'autre de manière amovible sans destruction par une fiche de raccordement et la fiche de raccordement étant formée par une liaison par bouton pression (3),
**caractérisée en ce que** la liaison par bouton pression (3) et les zones de raccordement (11, 12) qui s'y raccordent respectivement du conducteur plat (1) et du câble (2) sont entourées par un boîtier (13), le boîtier (13) comportant un joint (15) placé à l'intérieur (14) du boîtier (13) et le boîtier (13) et le joint (15) étant conçus en tant qu'une unité pré-assemblable.

2. Vitre composite selon la revendication 1, **caractérisée en ce que** la liaison par bouton pression (3) est formée par une partie inférieure (4) de contact et par une partie supérieure (5) de contact et **en ce que** la partie inférieure (4) de contact et la partie supérieure (5) de contact sont reliées par complémentarité de force et/ou de forme de manière conductrice d'électricité.

3. Vitre composite selon la revendication 2, **caractérisée en ce que** sur le côté qui fait face au câble (2), le conducteur plat (1) est relié avec la partie inférieure (4) de contact et sur le côté qui est opposé au conducteur plat (1), le câble (2) est relié avec la partie supérieure (5) de contact.

4. Vitre composite selon l'une quelconque des revendications 1 à 3, **caractérisée en ce que** le câble (2) est conçu en tant que câble rond.

5. Vitre composite selon l'une quelconque des revendications 1 à 4, **caractérisée en ce que** sur le côté qui est opposé à la liaison par bouton pression (3), le conducteur plat (1) comporte un premier raccord (6) et entre le premier raccord (6) et la liaison par bouton pression (3), le conducteur plat (1) comporte une première isolation (7).

6. Vitre composite selon l'une quelconque des revendications 1 à 5, **caractérisée en ce que** sur le côté qui est opposé à la liaison par bouton pression (3), le câble (2) comporte un deuxième raccord (8) électrique qui peut se relier avec le faisceau de câbles (9) d'un véhicule automobile.

7. Vitre composite selon la revendication 6, **caractérisée en ce qu'**entre la liaison par bouton pression (3) et le deuxième raccord (8), le câble est entouré par une deuxième isolation (10).

8. Vitre composite selon l'une quelconque des revendications 1 à 7, **caractérisée en ce que** le joint (15) est formé par une mousse de silicone qui remplit de manière sensiblement complète le boîtier (13) et qui entoure la liaison par bouton pression (3) en étant immédiatement adjacente et de manière sensiblement complète.

9. Vitre composite selon l'une quelconque des revendications 1 à 8, **caractérisée en ce que** le boîtier (13) comprend deux coques (17, 18) de boîtier, **en ce que** la première coque (17) de boîtier comporte des tenons d'enclenchement (19) qui sont enclenchables dans des contre-dépouilles (20) de la deuxième coque (18) de boîtier.

10. Vitre composite selon la revendication 9, **caractérisée en ce que** les coques (17, 18) de boîtier sont reliées ensemble de manière à pouvoir s'ouvrir et se fermer sans destruction par une charnière (21).

11. Vitre composite selon l'une quelconque des revendications 1 à 10, **caractérisée en ce que** le consommateur électrique (22) est un chauffage de vitre ou une antenne.

12. Vitre composite selon l'une quelconque des revendications 1 à 11, **caractérisée en ce que** la première isolation (7) du conducteur plat (1) est partiellement placée dans la vitre composite (23).

13. Utilisation d'une liaison conductrice d'électricité comprenant un conducteur plat (1) et un câble (2) qui sont reliés l'un à l'autre de manière amovible sans destruction par une liaison par bouton pression (3), pour relier un consommateur électrique (22) de manière conductrice d'électricité dans une vitre composite (23), sachant qu'il est assuré qu'un raccord (6) électrique du conducteur plat (1) soit relié de manière conductrice d'électricité avec le consommateur électrique (22) et que le conducteur plat (1) soit partiellement placé dans la vitre composite,
**caractérisée par**
le montage d'un boîtier (13) autour de la liaison par bouton-pression (3) et les zones de raccord (11, 12) qui s'y raccordent respectivement du conducteur plat (1) et du câble (2), l'intérieur (14) du boîtier (13) comportant un joint (15) et le boîtier (13) et le joint (15) étant conçus en tant qu'une unité (16) pré-assemblable.

14. Utilisation d'une liaison conductrice d'électricité selon la revendication 13, pour relier de manière conductrice d'électricité un consommateur électrique (22) dans une vitre composite (23) selon l'une quelconque des revendications 1 à 12.
